# EUROPÄISCHE PATENTSCHRIFT

(11) **EP 1 144 174 B1**
(45) Veröffentlichungstag und Bekanntmachung des Hinweises auf die Patenterteilung: **14.08.2002**
(21) Anmeldenummer: 99968367.5
(22) Anmeldetag: 22.12.1999
(51) Int. Cl.: B29C 45/54, B29C 45/00

(54) **VORRICHTUNG ZUM HERSTELLEN VON MIT LANGFASERN VERSTÄRKTEN SPRITZGIESSTEILEN**
APPARATUS FOR PRODUCING INJECTION MOLDED PARTS REINFORCED WITH LONG FIBERS
DISPOSITIF POUR LA PRODUCTION DE PIECES MOULEES PAR INJECTION RENFORCEES PAR DES FIBRES LONGUES

(30) Priorität: 22.12.1998 DE 19859472
(43) Veröffentlichungstag der Anmeldung: 17.10.2001
(73) Patentinhaber: Krauss-Maffei Kunststofftechnik GmbH, 80997 München (DE)
(72) Erfinder: WOBBE, Hans, D-82211 Herrsching (DE); KLOTZ, Bernd, D-85232 Günding/Bergkirchen (DE); ZWIESELE, Jochen, D-80999 München (DE)
(74) Vertreter: Zollner, Richard
(86) Internationale Anmeldenummer: EP9910284
(87) Internationale Veröffentlichungsnummer: WO0037233

(56) Entgegenhaltungen:
- EP-A- 0 743 160
- EP-A- 0 835 734
- WO-A-86/06321
- DE-A- 19 517 009
- FR-A- 2 549 770
- US-A- 5 358 680
- US-A- 5 454 995
- PATENT ABSTRACTS OF JAPAN vol. 1995, no. 07, 31. August 1995 (1995-08-31) -& JP 07 108575 A (MITSUBISHI HEAVY IND LTD), 25. April 1995 (1995-04-25)
- "In-line compounding system cuts molding costs, lift quality" MODERN PLASTICS INTERNATIONAL,CH,MCGRAW-HILL,INC. LAUSANNE, Bd. 23, Nr. 10, 1. Oktober 1993 (1993-10-01), Seite 109 XP000397549 ISSN: 0026-8283

## Beschreibung

Die Erfindung betrifft eine Vorrichtung zum Herstellen von mit Langfasern verstärkten Spritzgießteilen gemäß Oberbegriff des Patentanspruchs.

Eine Vorrichtung dieser Art ist aus der WO 86/06321 bekannt, bei der in einem Compounder mit zwei gleichlaufenden Schnecken faserhaltiges Verstärkungsmaterial eingegeben wird. Das mit Fasern beladene Schmelzematerial wird nachfolgend einer Spritzeinheit zugeführt, in der mittels eines hydraulisch betätigten Stufenkolbens der für den anschließenden Spritzvorgang erforderliche Einspritzdruck erzeugt wird. Da die Spritzeinheit nur taktweise betätigt werden kann, muss der Compounder entsprechend der Betriebsweise der Spritzeinheit abgestellt und wieder in Gang gesetzt werden. Diese intermittierende Betriebsweise wirkt sich beim Einzug von langen Verstärkungsfasern sehr schädlich aus, zudem ist die Verarbeitungsmenge bzw. die Leistung der aus Compounder und Spritzeinheit bestehenden Spritzgießmaschine begrenzt. Es ist aus der DE 195 17 009 zwar grundsätzlich bekannt, dass einer Plastifiziereinheit ohne Langfasereinzug zwei wechselweise beschickbare Spritzeinheiten nachgeordnet sein können. Die Plastifiziereinheit besteht aber aus einer einzelnen Schubschnecke, die in einem ersten Arbeitsgang zunächst Schmelze erzeugt und in einem anschließenden Arbeitsgang die erzeugte Schmelze ausstößt. Diese mit axialen Bewegungen der Schnecke einhergehenden Arbeitsgänge wären jedoch für einen beschädigungsfreien Einzug von langen Verstärkungsfasern nicht geeignet. In gleicher Weise nachteilig würden sich hülsenförmige Ventilkörper in den nachgeordneten Spritzeinheiten auswirken, da mit den Absperrvorgängen stets auch die Verstärkungsfasern abgeschert werden würden.

Der Erfindung liegt daher die Aufgabe zugrunde, das in einem Compounder mit zwei gleichsinnig drehenden Schnecken erzeugte Langfaser-Schmelzegemisch in einem kontinuierlichen Arbeitsgang und mit gleichförmiger Qualität unter weitestgehender Vermeidung von die Langfaserstruktur des faserbeladenen Schmelzestromes schädigenden Einflüssen der Spritzgießeinheit zuzuführen. Im folgenden wird die Erfindung unter Hinweis auf die Zeichnung anhand von Ausführungsbeispielen näher erläutert.

Es zeigt in teilweiser Schnittdarstellung:
Fig. 1: einen Compounder mit nachgeordneten Druckerzeugungs- und Austragseinrichtungen für Schmelze und daran angeschlossenen Spritzgießeinrichtungen nach dem Stand der Technik,
Fig. 2 einen Compunder mit Druckerzeugungs- und Austragseinrichtungen und daran angeschlossenen Spritzgießeinrichtungen und
Fig.3 einen erfindungsgemäßen Compounder mit der Ausführungsform nach Fig. 2 entsprechenden Druckerzeugungs- und Austragseinrichtungen sowie einem daran angeschlossenen zu einer Einspritzdüse führenden Schmelzezuleitungssytem.

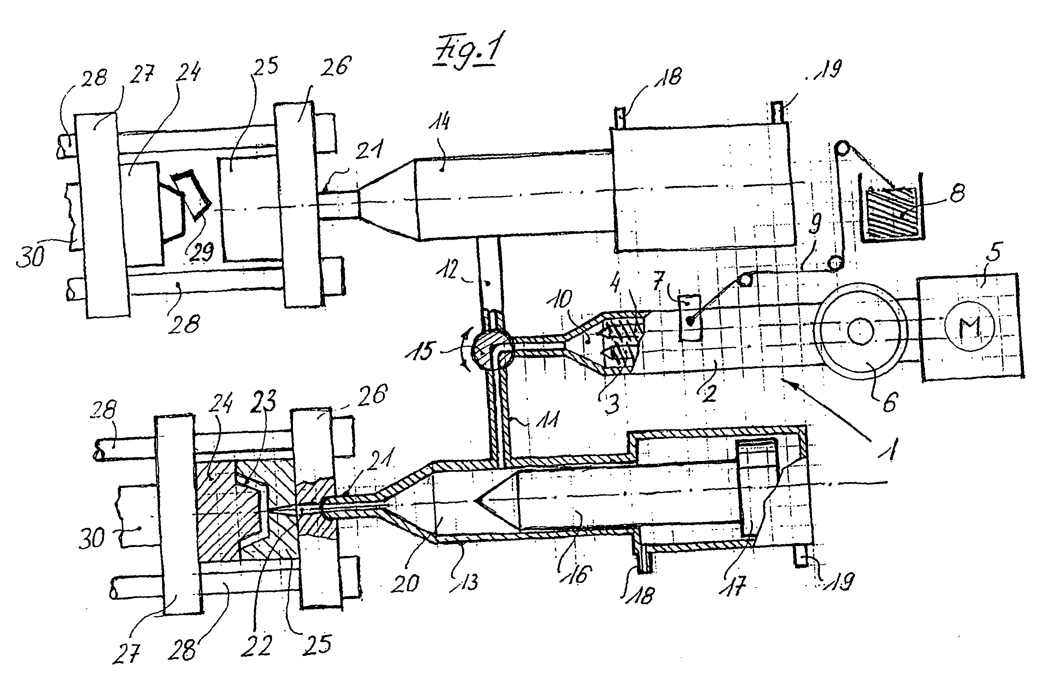

Die Fig. 1 zeigt einen Compounder 1, der in einem Doppelschneckengehäuse 2 zwei gleichsinnig drehende und miteinander kämmende Schnecken 3 und 4 aufweist. Die Schnecken 3 und 4 werden kontinuierlich von einem Drehantrieb 5 angetrieben.

Am Doppelschneckengehäuse 2 sind ein Fülltrichter 6 für Thermoplastgranulat und eine Einführeinrichtung 7 für einen von einem Roving 8 abgewickelten Endlos-Langfaserstrang 9 angeordnet. Der Langfaserstrang 9 kann z.B. aus Glasfasern bestehen. Grundsätzlich ist hierfür über jede Art von Verstärkungsfasern geeignet, wie z.B. Kohlestofffasern, Keflarfasern oder natürliche Fasern, wie Hanffasern.

Der Schneckenvorraum 10 des Compounders 1 mündet in Abzweigungsleitungen 11 und 12, die jeweils zu Druckerzeugungseinrichtungen 13 und 14 führen.

Mittels eines Schaltventils 15 ist der Schneckenvorraum wechselweise mit den Druckerzeugungs- und Austragseinrichtungen 13 und 14 verbindbar.

Die Druckerzeugungs- und Austragseinrichtungen 13 und 14, von denen die untere teilweise geschnitten dargestellt ist, weisen jeweils einen Spritzkolben 16 und einen hydraulischen Betätigungskolben 17 auf, der wechselweise über die Hydraulikanschlüsse 18 und 19 mit Druckmedium beaufschlagbar ist. Das Druckmedium wird von einer Pumpe (nicht dargestellt) gefördert, mit der ein bestimmtes Druckprofil erzeugbar ist.

Die Zylinderräume 20 der Druckerzeugungs- und Austragseinrichtungen 13 und 14 stehen über eine Einspritzdüse 21 und einen Angußkanal 22 mit der Formkavität 23 eines aus zwei Formhälften 24 und 25 bestehenden Spritzgießwerkzeugs in Verbindung. Die Formhälften 24 und 25 sind jeweils auf einer festen Formträgerplatte 26 und einer beweglichen Formträgerplatte 27 aufgespannt. Die beiden Formträgerplatten 26 und 27 sind von Führungsholmen 28 durchsetzt. Die bewegliche Formträgerplatte 27 ist mit einer nur teilweise dargestellten Hydraulikeinheit 30 gekoppelt., mit der die bewegliche Formträgerplatte 27 in Schließ- und Öffnungspositionen gebracht wird.

Im Betrieb wird mit dem Compounder 1 ein kontinuierlicher Massestrom aus Thermoplastschmelze erzeugt, der in homogener Weise von einem Endlosfaserstrang des über die Einführeinrichtung 7 eingezogenen Langfaserstranges 9 durchsetzt ist.

Der Massestrom gelangt, gesteuert vom Schaltventil 15, in den Zylinderraum 20 und wird nach dessen vollständiger Füllung mit von Langfasern durchsetzter Schmelze und nach einer Schaltung des Schaltventils 15 in eine die Verbindung zwischen Schneckenvorraum 10 und Zylinderraum 20 unterbrechende Stellung (nicht dargestellt) mit dem Spritzkolben 16 über die Einspritzdüse 21 und den Angußkanal 22 in die Formkavität 23 eingespritzt. Über die gesteuerte oder geregelte Beaufschlagung des Arbeitskolbens 17 mit hydraulischem Druckmittel wird in der Formkavität 23 das zur Erzeugung des Spritzgießteils 29 erforderliche Druckprofil eingestellt.

In der Zeichnung sind die Druckerzeugungseinrichtung 13, die Abzweigungsleitung 11, das Schaltventil 15 und der Schneckenvorraum 10 geschnitten dargestellt und zeigen die Durchgangspassage für den kontinuierlichen Massestrom vom Compounder 1 bis zur Formkavität.

Der obere Teil der Zeichnung zeigt ein geöffnetes Spritzgießwerkzeug mit einem ausgeworfenen fertigen Spritzgießteil 29.

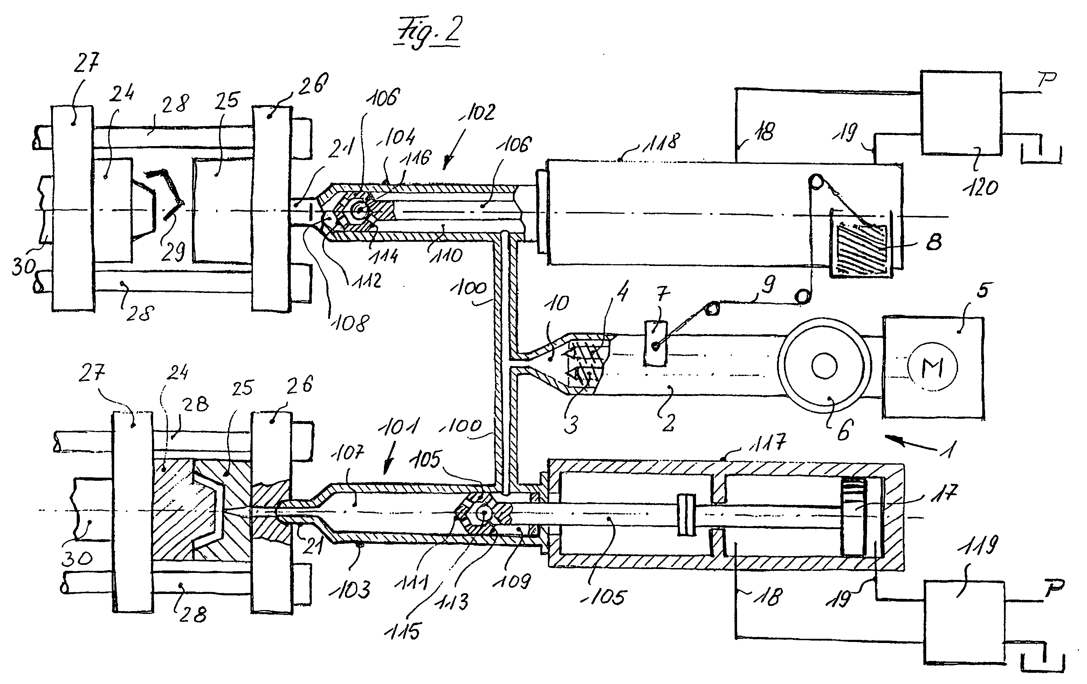

Bei der in Fig. 2 dargestellten Spritzgießmaschine entsprechen der Compounder 1, die beiden Spritzgießeinrichtungen und die beiden hydraulischen Kolben-Zylindereinheiten mit dem Arbeitskolben 17 und den Hydraulikanschlüssen 18 und 19 der Ausführungsform nach Fig. 1, wobei insoweit gleiche Bezugszeichen verwendet werden.

Vom Schneckenvorraum 10 des Compounders 1 zweigen zwei Heißkanäle 100 zu zwei Einspritzeinheiten 101 und 102 ab, die jeweils einen Einspritzzylinder 103 und 104 aufweisen, in denen jeweils ein Einspritzkolben in Form eines Stufenkolbens 105 und 106 reversierbar geführt ist. Der Stufenkolben 105, 106 unterteilt den Zylinderraum des Einspritzzylinders 103, 104 in einen Einspritzraum 107, 108 und in einen Einspeiseraum 109, 110, wobei die größere Kolbenfläche 111, 112 des Stufenkolbens 105, 106 den Einspritzraum 107, 108 und die kleinere, ringförmige Kolbenfläche 113, 114 des Stufenkolbens 105, 106 den Einspeiseraum 109, 110 abgrenzen . Im Stufenkolben 105,. 106 ist eine Rückstromsperre 115, 116 angeordnet, die die Passage vom Einspritzraum 107, 108 zum Einspeiseraum 109, 110 sperrt und die in entgegengesetzter Richtung durchgängig ist. Der Stufenkolben 105, 106 wird jeweils von einer hydraulischen Kolben-Zylindereinheit 117, 118 betätigt. Die Einspritzräume 107, 108 münden in die Einspritzdüsen 21, die jeweils unmittelbar an die Spritzgießeinrichtungen anschließen.

Die mit dem Stufenkolben 105, 106 gekoppelten hydraulischen Kolben-Zylindereinheiten 117, 118 sind mit jeweils einer Regelungseinrichtung 119, 120 versehen, über die die Stufenkolben 105, 106 folgende Arbeitsgänge durchführen können:
- Erzeugung von Staudruck beim Befüllen der Einspritzeinheit 101, 102 mit Schmelze,
- Erzeugung des Spritzdruckes und
- Erzeugung des Nachdruckes.

Im weiteren kann der Stufenkolben 105, 106 zur Durchführung eines Spülvorganges in die hinterste Position (Position des Stufenkolbens 105) gebracht werden, in der der Einspeiseraum auf einen ringförmigen Einspeisekanal reduziert ist.

Im Betrieb wird die kontinuierlich im Compounder 1 erzeugte und mit Langfasern durchmischte Schmelzemenge in abwechselnder Abfolge über den Heißkanal 100, den Einspeiseraum 109, 110 und die Passage im Stufenkolben 105, 106 in die Einspritzräume 107, 108 der Einspritzeinheiten 101, 102 geleitet.

Der Vorgang des Befüllens wird anhand der in der Fig. 2 unten dargestellten Einspritzeinheit 103 erläutert. In dieser Betriebsphase wird der Stufenkolben 105, gesteuert von der Regelungseinrichtung 119 mit geringem Staudruck beaufschlagt. Der Staudruck ist dabei der Schmelzedruck, wie er im Compounder 1 erzeugt wird., Dieser Staudruck bewirkt, dass sich der Stufenkolben 105 durch den sich einstellenden Differenzdruck kontrolliert nach hinten verschiebt und einen gleichförmigen Ablauf der Befüllung des Einspritzraumes 107 sicherstellt. Die vom Compounder 1 geförderte und mit Langfasern beladene Schmelzemenge, die sich auf einem verhältnismäßig niedrigem Druckniveau von z.B. 120 bar befindet, strömt in den Einspeiseraum 109 und gelangt über die mit der Rückstromsperre 115 versehene Passage im Stufenkolben 105 in den Einspritzraum 107. Aufgrund der Flächendifferenz zwischen der größeren Kolbenfläche 111 und der kleineren ringförmigen Kolbenfläche 113 stellt sich der Stufenkolben 105 unter gleichzeitiger Befüllung des Einspritzraumes 107 soweit zurück, bis das für den nachfolgenden Einspritzvorgang erforderliche Schmelzevolumen erreicht ist.

Der anschließende Einspritzvorgang wird anhand der in Fig. 2 oben dargestellten Einspitzeinheit 102 erläutert. in dieser Betriebsphase wird der Stufenkolben 106, gesteuert von der Regeleinrichtung 120, über die hydraulische Kolben-Zylindereinheit 118 mit hoher Schubkraft beaufschlagt. Mit Beginn der Vorwärtsbewegung schließt die Rückstromsperre 116 und das im Einspritzraum 108 eingeschlossene Schmelzevolumen erfährt eine erhebliche Druckerhöhung auf das für den Einspritzvorgang erforderliche Druckniveau, das im Bereich von 1500 bis 2000 bar liegt. Die Abdichtung des unter dem hohen Einspritzdruck stehenden Schmelzevolumens erfolgt dabei über den Stufenkolben 106, wobei Leckagen an der Dichtung des Stufenkolbens 106 unerheblich sind, da die Leckagemengen lediglich in den Einspeiseraum 110 gelangen, von wo aus sie beim nächsten Befüllvorgang wieder in den Einspritzraum 108 gelangen.

Am Ende des Einspritzhubes des Stufenkolbens 106 schließt sich die Nachdruckphase an, in der zum Ausgleich der Schwindung der Schmelzemenge in der Formkavität (nicht dargestellt) Schmelze unter Einspritzdruck nachgedrückt wird.

Im Gegensatz zu der Ausführungsform nach Fig. 1 gelangt die mit Langfasern beladene Schmelze aus dem Schneckenvorraum 10 des Compounders 1 in einer stetigen, nur in einer Richtung verlaufenden Strömung zur Einspritzdüse 21. Es findet bei der Befüllung der Einspritzzylinder keine Umkehr der Strömung statt wie bei der Ausführungsform nach Fig. 1 oder der Ausführungsform nach der DE 195 38 225, in der noch eine weitere Strömungsumkehr in der Befüllung eines Zwischenspeichers stattfindet. Ein weiterer Vorteil der erfindungsgemäßen Vorrichtung nach Fig. 2 besteht darin, dass kein Umschaltventil zur wechselweisen Beschickung der Einspritzeinheiten erforderlich ist, wodurch kein Durchschneiden der Langfasern beim Schalten des Ventils stattfindet. Die Einspritzdüsen 21 sind vorzugsweise mit jeweils einem Absperrventil (nicht dargestellt) ausgestattet, das beim Befüllen des Einspritzraumes 107, 108 bzw. beim Zurückfahren des Stufenkolbens 105, 106 in Sperrstellung geschaltet wird.

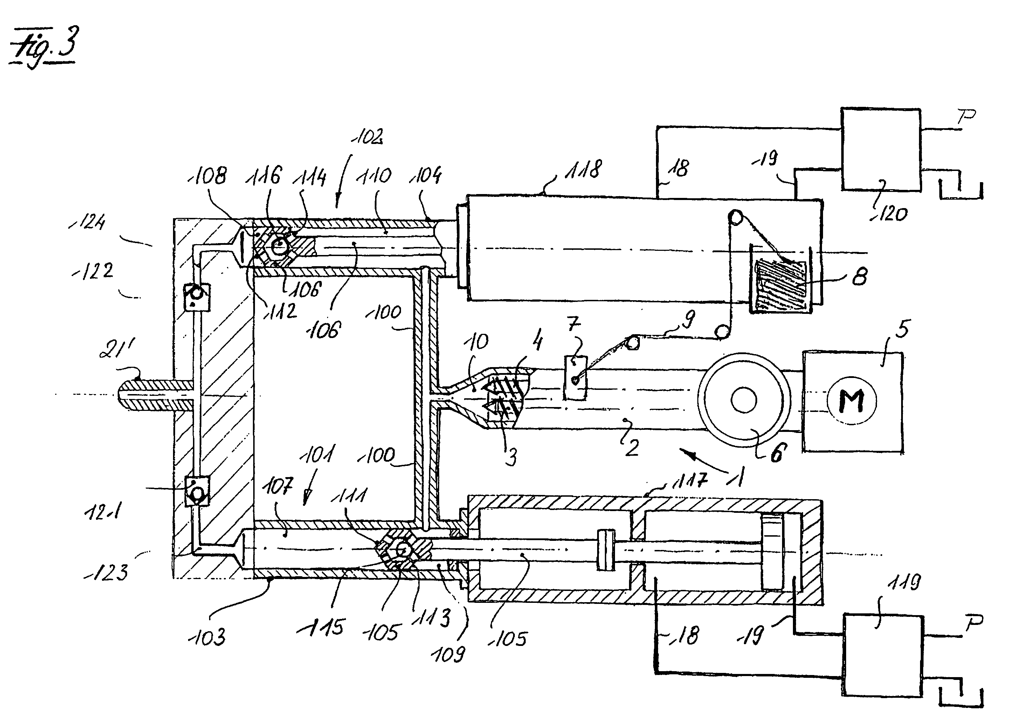

Die Ausführungsform nach Fig. 3 entspricht im wesentlichen der Ausführungsform nach Fig. 2, anstelle von zwei Spritzgießeinheiten wird jedoch nur eine Spritzgießeinheit (nicht dargestellt) über eine Einspritzdüse 21' mit dem Gemisch aus Langfasern und Schmelze befüllt. An die Einspritzräume 107, 108 schließen sich mit Rückschlagventilen 1231, 122 versehene Einspitzleitungen 123 und 124 an, die mit der Einspritzdüse 21' in Verbindung stehen. Die übrigen Elemente entsprechend der Ausführungsform nach Fig. 2 und sind dementsprechend mit den gleichen Bezugszeichen versehen.

## Patentansprüche

1. Vorrichtung zum Herstellen von mit Langfasern verstärkten Spritzgießteilen aus Thermoplastkunststoff durch Spritzgießen im Spritzgießwerkzeug einer Spritzgießmaschine, in der mit einem Compounder (1) mit zwei gleichlaufenden kämmenden Schnecken (3,4) ein mit Langfasern verstärkter Strom aus Thermoplastschmelze erzeugt wird, der anschließend mittels einer Kolben-Zylindereinheit (117,118) unter Erzeugung des für den Spritzvorgang erforderlichen Spritzgieß-Druckprofils in mindestens eine Formkavität eines Spritzgießwerkzeugs (24,25) gefördert wird, wobei in der Kolben-Zylindereinheit (117,118) der Kolben als Stufenkolben (105,106) ausgebildet ist, der den Zylinderraum der Kolben-Zylindereinheit (117,118) jeweils in einen Einspritzraum (107,108) und in einen Einspeiseraum (109,110) unterteilt und wobei aufgrund der größeren Kolbenfläche (113,114) des Stufenkolbens (105,106) im Einspritzraum (107,108) und aufgrund der kleineren ringförmigen Kolbenfläche (113,114) des Stufenkolbens (105,106) im Einspeiseraum (109,110) die Thermoplastschmelze durch eine vom Einspeiseraum (109,110) zum Einspritzraum (107,108) führende Passage gefördert wird, in der eine in umgekehrter Richtung sperrende Rückstromsperre (115,116) angeordnet ist, und wobei anschließend die mit Langfasern beladene Thermoplastschmelze beim Vorschub des Stufenkolbens (105,106) zu einer Einspritzdüse (21,21') weitergefördert wird, über die die Thermoplastschmelze der Formkavität (23) des.Spritzgießwerkzeugs (24,25) zugeführt wird, **dadurch gekennzeichnet, dass**
- der Compounder (1) kontinuierlich betreibbar ist, wobei
- in alternierender Abfolge mindestens zwei Kolben-Zylindereinheit mit Stufenkolben (105, 106) mit mit Langfasern beladener Thermoplastschmeize befüllt werden und dass
- zwischen dem Einspritzraum (107, 108) und der Einspritzdüse (21, 21') jeweils ein die Rückströmung von der Einspritzdüse (21, 21') zum Einspritzraum (107, 108) sperrendes Rückschlag- bzw. Einwegventil (121, 122) angeordnet ist.

## Claims

1. An apparatus for manufacturing long fiber reinforced injection moulded parts from thermoplastic material by injection moulding in the injection moulding tool of an injection moulding machine, wherein a long fiber reinforced flow of thermoplastic melt is created by a compounder (1) having two co-rotating meshing screws (3, 4), which flow is then conveyed into at least one mould cavity of an injection moulding tool (24, 25) using a piston/cylinder unit (117, 118) while generating the injection moulding pressure profile required for the injection process, said piston being formed as a stepped piston (105, 106) in said piston/cylinder unit (117, 118) and subdividing the cylinder space of the piston/cylinder unit (117, 118) into an injection space (107, 108) and a feeding space (109, 110), wherein the thermoplastic melt is conveyed through a passage extending from said feeding space (109, 110) to said injection space (107, 108) due to the larger piston area (113, 114) of the stepped piston (105, 106) in the injection space (107, 108) and due to the smaller annular piston area (113, 114) of the stepped piston (105, 106) in said feeding space (109, 110), in which passage a non-return valve (115, 116) blocking a reverse flow is located, and wherein the long fiber charged thermoplastic melt is then conveyed further towards an injection nozzle (21, 21') when the stepped piston is advanced, with the thermoplastic melt being fed into the mould cavity (23) of the injection moulding tool (24, 25) through said injection nozzle, **characterized in that**
- said compounder (1) can be operated continuously, wherein
- at least two piston/cylinder units having stepped pistons (105, 106) are filled with long fiber charged thermoplastic melt in alternating sequence, and **in that**
- a check valve or one-way-valve (121, 122) blocking the reverse flow from the injection nozzle (21, 21') to the injection space (107, 108) is located between each injection space (107, 108) and each injection nozzle (21, 21').

## Revendications

1. Dispositif pour la fabrication de pièces moulées par injection renforcées par des fibres longues à partir de thermoplastique par moulage par injection dans le moule pour injection d'une presse d'injection, dans lequel on génère avec un mélangeur (1) équipé de deux vis sans fin (3, 4) s'engrenant dans le même sens un flux renforcé avec des fibres longues de thermoplastique fondu, qui est transporté ensuite au moyen d'un ensemble piston-vérin (117, 118) en générant le profilé sous pression pour moulage par injection nécessaire pour l'opération d'injection dans au moins une cavité d'un moule d'injection (24, 25), le piston étant conçu dans l'ensemble piston-vérin (117, 118) comme un piston à gradin (105, 106), qui subdivise le compartiment du vérin de l'ensemble piston-vérin (117, 118) respectivement en un compartiment d'injection (107, 108) et en un compartiment d'alimentation (109, 110) et moyennant quoi, du fait de la surface de piston (113, 114) supérieure du piston à gradin (105, 106) dans le compartiment d'injection (107, 108) et en raison de la surface de piston (113, 114) inférieure et de forme annulaire du piston à gradin (105, 106) dans le compartiment d'alimentation (109, 110), le bain de thermoplastique est transporté par un passage allant du compartiment d'alimentation (109, 110) au compartiment d'injection (107, 108), dans lequel est disposé un clapet antiretour (115, 116) bloquant dans le sens inverse, et moyennant quoi le bain thermoplastique chargé de fibres longues est acheminé lors de l'avancement du piston à gradin (105, 106) vers une buse d'injection (21, 21'), par laquelle le bain de thermoplastique est amené à la cavité (23) du moule d'injection (24, 25), **caractérisé en ce que**
- le mélangeur peut être exploité de façon continue, moyennant quoi
- au moins deux ensembles piston-vérin équipés de pistons à gradin (105, 106) sont remplis avec le bain de thermoplastique chargé de fibres longues dans une séquence alternante et **en ce**
- **qu'**une soupape antiretour et monovoie (121, 122), qui bloque le reflux de la buse d'injection (21, 21') vers le compartiment d'injection (107, 108), est disposée entre le compartiment d'injection (107, 108) et la buse d'injection (21, 21').
